(19) Europäisches Patentamt
European Patent Office
Office européen des brevets

(11) **EP 3 528 073 A1**

(12) **EUROPÄISCHE PATENTANMELDUNG**

(43) Veröffentlichungstag:
**21.08.2019 Patentblatt 2019/34**

(51) Int Cl.:
*G05B 23/02* (2006.01)    *G05B 9/02* (2006.01)

(21) Anmeldenummer: **18156928.6**

(22) Anmeldetag: **15.02.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **Siemens Aktiengesellschaft 80333 München (DE)**

(72) Erfinder: **Die Erfindernennung liegt noch nicht vor**

(54) **VERFAHREN ZUM SICHEREN BETRIEB EINER STEUEREINRICHTUNG, VORRICHTUNG, COMPUTERPROGRAMMPRODUKT UND INDUSTRIELLE ANLAGE**

(57)    Die Erfindung betrifft ein Verfahren zum sicheren Betrieb einer Steuereinrichtung (1a, 1b), eine Vorrichtung zum sicheren Steuern eines Antriebs sowie ein Computerprogrammprodukt und eine industrielle Anlage. Zumindest eine Steuereinrichtung (1a, 1b) berechnet eine Bewegungsgröße (v) aus einer Messgröße (x) mit Hilfe einer Berechnungsvorschrift (F). Um einen systematischen Fehler in der Berechnungsvorschrift (F) oder in der Steuereinrichtung (1a, 1b) aufzudecken, erfolgt mit zumindest einer Steuereinrichtung (1a, 1b) die Berechnung einer weiteren Bewegungsgröße ($v_1$) mit der Berechnungsvorschrift (F). Die Berechnungsvorschrift (F) erhält hierzu Tabellen-Istwerte (x') aus einer ersten Tabelle (T1). Die jeweilige weitere Bewegungsgröße (v2) wird jeweils mit einem Tabellen-Sollwert ($v_2$) verglichen. Falls die weitere Berechnungsgröße ($v_1$) von dem Tabellen-Sollwert ($v_2$) abweicht, wird ein Warnsignal (WS) bereitgestellt.

FIG 1

Printed by Jouve, 75001 PARIS (FR)

**Beschreibung**

Die Erfindung betrifft ein Verfahren zum sicheren Betrieb einer Steuereinrichtung und eine Vorrichtung zum Steuern eines Antriebs. Weiter betrifft die Erfindung eine industrielle Anlage und ein Computerprogrammprodukt.

Industrielle Anlagen sind in der Regel für einen sicheren Betrieb auszugestalten. Vielfach werden hierzu Antriebskomponenten mehrfach ausgeführt, wobei beim Ausfall einer Antriebskomponente eine andere Antriebskomponente einspringt.

Insbesondere US 2014/0288881 A1 beschreibt ein Verfahren zum sicheren Betrieb einer Anlage.

Selbst bei mehrfach ausgeführten Antriebskomponenten kann es zu einem systematischen Fehler kommen.

Es ist daher Aufgabe der Erfindung, eine Anlage sicher zu betreiben.

Die Aufgabe wird durch ein Verfahren nach Anspruch 1 gelöst. Die Aufgabe wird weiter durch eine Vorrichtung nach Anspruch 13 gelöst. Weiter wird die Aufgabe durch eine industrielle Anlage mit einer solchen Vorrichtung und durch ein Computerprogrammprodukt nach Anspruch 17 gelöst.

Weitere vorteilhafte Ausgestaltungen der Erfindung sind Gegenstand der abhängigen Ansprüche.

Bei dem Verfahren zum sicheren Betrieb einer Steuereinrichtung dient zumindest eine Steuereinrichtung zur Berechnung einer Bewegungsgröße, wobei zur Berechnung der Bewegungsgröße eine Berechnungsvorschrift dient, wobei die Richtigkeit der Berechnung der Bewegungsgröße mit zumindest folgenden Schritten geprüft wird:

- Berechnung einer weiteren Bewegungsgröße mit einem Tabellen-Istwert aus einer ersten Tabelle,
- Bereitstellen eines Tabellen-Sollwertes aus einer zweiten Tabelle,
- Vergleich der weiteren Bewegungsgröße mit dem Tabellen-Sollwert,
- Ausgabe eines Warnsignals falls die weitere Bewegungsgröße von dem Tabellen-Sollwert abweicht.

Als Steuereinrichtung dient vorteilhaft eine Speicherprogrammierbare Steuereinrichtung (SPS) oder eine Bewegungssteuerung. Die Steuereinrichtung weist vorteilhaft eine Recheneinheit wie einen Mikrocomputer oder einen Mikrocontroller auf.

Die Steuereinrichtung dient insbesondere zur Bereitstellung zumindest einer Bewegungsgröße. Die Bewegungsgröße dient vorteilhaft zur Steuerung oder Regelung eines Antriebs einer Anlage, wobei die Steuereinrichtung zur Steuerung der Anlage beiträgt. Davon unabhängig erfolgt vorteilhaft die Prüfung der Richtigkeit der Berechnung.

Die Steuereinrichtung berechnet die Bewegungsgröße anhand einer Messgröße, wobei die Messgröße einer Position eines Anlagenteils entsprechen kann.

Anhand einer Prüfung soll festgestellt werden, ob die Berechnungsvorschrift richtig funktioniert. Insbesondere kann durch die Prüfung bestimmt werden, ob ein systematischer Fehler in der zumindest einen Steuereinrichtung vorliegt.

Die Bewegungsgröße kann ein Abstand, ein Drehwinkel, eine (Dreh-) Geschwindigkeit, eine (Dreh-) Beschleunigung, ein (Dreh-) Moment oder ein Ruck sein. Die Berechnungsgröße kann als Sollwert für eine Regelung eines Antriebs bereitgestellt werden.

Die Berechnungsvorschrift kann als Funktion ausgebildet sein, die insbesondere einer Messgröße eine Bewegungsgröße zuordnet. Vorteilhaft ist die Berechnungsvorschrift als Software-Funktion ausgebildet. Die Berechnungsvorschrift wird vorzugsweise aufgerufen und eine Messgröße bereitgestellt. Die Berechnungsvorschrift berechnet die Bewegungsgröße anhand der Messgröße und stellt die Bewegungsgröße bereit.

Die erste Tabelle umfasst in der Regel Tabellen-Istwerte, die einer Messgröße entsprechen. Die Tabellen-Istwerte aus der Tabelle entsprechen vorteilhaft denjenigen Messgrößen, die der Berechnungsvorschrift bei der Berechnung der jeweiligen Bewegungsgröße bereitgestellt werden.

Die zweite Tabelle umfasst Tabellen-Sollwerte. Der jeweilige Tabellen-Sollwert entspricht vorteilhaft einer bereits berechneten Bewegungsgröße, die mit der Berechnungsvorschrift anhand eines Tabellen-Istwertes berechnet worden ist.

Die Tabellen-Sollwerte können mit Hilfe einer weiteren Recheneinheit berechnet werden und der zweiten Tabelle bereitgestellt werden.

Anhand des jeweiligen Tabellen-Istwertes berechnet die Berechnungsvorschrift eine weitere Bewegungsgröße. Die weitere Bewegungsgröße entspricht einer (gewöhnlichen) Bewegungsgröße, welche die Berechnungsvorschrift anhand der Messgröße berechnet hätte. Die weitere Bewegungsgröße wird mit der Berechnungsvorschrift aus dem jeweiligen Tabellen-Istwert berechnet. Demnach entspricht die jeweilige weitere Bewegungsgröße dem Ergebnis, was die Berechnungsvorschrift auf Grundlage des jeweiligen Tabellen-Istwertes bereitstellt.

Ein Vergleich der jeweiligen weiteren Berechnungsgröße mit dem jeweiligen Tabellen-Sollwert erfolgt vorteilhaft in einem zweiten Vergleichsmodul. Das Vergleichsmodul überprüft, ob die weitere Berechnungsgröße dem jeweiligen Tabellen-Sollwert entspricht oder zumindest im Wesentlichen entspricht.

Durch die Berechnung der Tabellen-Sollwerte kann ein systematischer Fehler bei der Berechnung der Bewegungsgrößen mit Hilfe der jeweiligen Steuereinrichtung wirksam verhindert werden.

Das Warnsignal kann einem Schaltmodul bereitgestellt werden, wobei bei Ausgabe eines Warnsignals das Schaltmodul zumindest einen Antrieb der Anlage in einen sicheren Zustand überführt. Das Warnsignal wird dann bereitgestellt, falls die Steuereinrichtung und/oder die Berechnungsvorschrift möglicherweise fehlerhaft sind. Beispielhaft kann die Anlage auch bei Vorliegen eines Warnsignals ausgeschaltet werden.

Der Vergleich kann in einer besonders einfachen Ausgestaltung der Erfindung derart erfolgen, dass bei einer Abweichung der weiteren Bewegungsgröße mit der bereits berechneten Bewegungsgröße über einen numerischen Fehler hinaus das Warnsignal ausgegeben wird.

Bei einer vorteilhaften Ausgestaltung der Erfindung wird der jeweilige Tabellen-Sollwert mit einem Offset zu einer Summe addiert,

wobei beim Vergleich der Summe mit der jeweiligen weiteren Bewegungsgröße ein Signal mit einer ersten Signalstärke bereitgestellt wird, insofern die Summe größer als die weitere Bewegungsgröße ist,

wobei beim Vergleich der Summe mit der jeweiligen Bewegungsgröße das Signal mit einer zweiten Signalstärke bereitgestellt wird, insofern die Summe kleiner als die weitere Bewegungsgröße ist.

Alternativ kann der Offset zu der jeweiligen weiteren Bewegungsgröße addiert werden, wobei die jeweilige Summe aus der weiteren Bewegungsgröße und dem Offset mit dem jeweiligen Tabellen-Sollwert verglichen wird.

Der Offset kann eine numerische Größe im Bereich von -0,5 bis +0,5 sein.

Der Offset alterniert vorteilhaft von Vergleich zu Vergleich zwischen dem kleinen positiven Wert und dem kleinen negativen Wert.

Der Vergleich erfolgt vorteilhaft nach oder während eines Zyklus, insbesondere eines Berechnungszyklus. Vorteilhaft erfolgt eine Mehrzahl von Berechnungen jeweils einer Bewegungsgröße sowie ein Vergleich während des Zyklus.

Demnach kann die Bereitstellung des Signals mit einer alternierenden Signalstärke bei jedem Zyklus erfolgen. Demnach entsteht ein Signal mit einer Rechteckspannung.

Vorteilhaft erfolgen die Berechnung der Bewegungsgröße in einer ersten Prozedur und die Überprüfung der Berechnungsfunktion mit Hilfe einer zweiten Prozedur.

Bei der ersten Prozedur wird, insbesondere aus einer Messgröße, eine Bewegungsgröße berechnet. Zur Berechnung der Bewegungsgröße dient die Berechnungsvorschrift. Optional wird mit einem ersten Vergleichsmodul überprüft, ob die Bewegungsgröße jeweils ein Maximalwert nicht überschreitet. Bei Überschreiten des Maximalwertes wird ein Warnsignal ausgegeben und die Anlage kann in einen sicheren Zustand überführt werden.

Durch die zweite Prozedur kann festgestellt werden, ob die Berechnung mit der Berechnungsvorschrift richtig erfolgt.

Ausgehend von Tabellen-Istwerten aus der ersten Tabelle werden jeweils mit Hilfe der Berechnungsvorschrift weitere Bewegungsgrößen berechnet. Die jeweils weitere Bewegungsgröße wird mit den entsprechenden Tabellen-Sollwert verglichen. Die Tabellen-Sollwerte sind vorteilhaft in der zweiten Tabelle abgelegt.

Gemäß der vorteilhaften Ausgestaltung des Vergleichs wird zu dem jeweiligen Tabellen-Sollwert jeweils ein Offset addiert. Der Offset ist vorzugsweise alternierend positiv oder negativ. Die Summe von dem positiven oder negativen Offset und dem jeweiligen Tabelle-Sollwert ist bei einer ordnungsgemäß funktionierenden Berechnungsvorschrift und/oder einer ordnungsgemäß funktionierenden Steuereinrichtung jeweils alternierend größer oder kleiner als die weitere Berechnungsgröße.

Durch ein Vergleichsmodul wird anhand dessen, ob die weitere Bewegungsgröße oder die Summe größer oder kleiner ist, ein Signal mit einer ersten Signalstärke oder einer zweiten Signalstärke bereitgestellt.

Hierbei kann die erste Signalstärke eine Spannung von 0 Volt und die zweite Signalstärke eine Spannung von 24 Volt betragen. Alternativ kann die erste Signalstärke eine Spannung von -5 Volt und die zweite Signalstärke eine Spannung von +5 Volt betragen.

Vorteilhaft erfolgt die zweite Prozedur bei oder nach jedem Durchlauf der ersten Prozedur. Alternativ erfolgt die zweite Prozedur einmal während eines Zyklus. Unter dem Zyklus wird hier insbesondere ein Berechnungszyklus verstanden. Vorteilhaft wird während eines Zyklus eine Mehrzahl von Bewegungsgrößen berechnet. Während eines Zyklus erfolgen ebenfalls eine Überprüfung durch eine zweite Prozedur und damit in der Regel ein Wechsel von Signalstärken.

Somit erfolgt bei einem Durchlauf der Prozedur in der Regel ein regelmäßiger Wechsel der Signalstärke des Signals. Ein solches Signal wird auch als Toggle-Bit bezeichnet.

Ein solches Toggle-Bit kann in einer Sicherheitssteuerung analysiert werden. Die Sicherheitssteuerung prüft vorteilhaft das Signal auf einen regelmäßigen Wechsel der Signalstärken. Vorteilhaft analysiert die Sicherheitssteuerung das Toggle-Bit auf die Frequenz und/oder die Signal-Stabilität.

Bei einer weiteren vorteilhaften Ausgestaltung der Erfindung wird das Signal auf einen regelmäßigen Wechsel von der ersten Signalstärke auf die zweite Signalstärke hin untersucht.

Vorteilhaft erfolgt ein Wechsel der Signalstärken zumindest einmal pro Zyklus. Durch die Bestimmung der Zeitdauer des Zyklus und/oder die Bestimmung der jeweiligen Zeitdauer zwischen den jeweiligen Wechseln zwischen den Signalstärken führt zu einer schnellen Überwachung der Funktion der jeweiligen Steuereinrichtung.

Durch die Erfindung kann insbesondere ein systematischer Fehler, der in mehreren Steuereinrichtungen gleichzeitig auftritt, registriert werden.

Bei einer weiteren vorteilhaften Ausgestaltung der Erfindung wird bei einer Unregelmäßigkeit des Wechsels der Signalstärken das Warnsignal ausgegeben.

Das Warnsignal wird vorteilhaft einem Schaltmodul bereitgestellt. Das Schaltmodul dient zur Überführung der gesteuerten industriellen Anlage in einen sicheren Zustand. Vorteilhaft wird hierfür der entsprechende Antrieb der Anlage oder ein Aktor der Anlage in eine sichere Ausgangsposition überführt.

Bei einer weiteren vorteilhaften Ausgestaltung der Erfindung erfolgt die Berechnung der Bewegungsgröße zumindest einmal in einem Zyklus, wobei die Richtigkeit der Berechnung der Bewegungsgröße jeweils während des Zyklus geprüft wird.

Während eines Zyklus werden vorteilhaft die jeweiligen Bewegungsgrößen derjenigen Antriebe berechnet, welche durch die jeweilige Steuereinrichtung gesteuert oder geregelt werden.

Vorzugsweise kann durch die jeweilige Prüfung und/oder des Vergleichs die Dauer des Zyklus bestimmt werden.

Verfahren nach einem der vorangehenden Ansprüche, wobei die Berechnung der Bewegungsgröße anhand einer Messgröße erfolgt.

Beispielhaft ist die Messgröße eine Position oder eine Ausrichtung eines Gefäßes, beispielsweise ein Gefäß einer Fördereinrichtung. Die Messgröße wird vorteilhaft durch einen Geber bestimmt und der jeweiligen Steuereinrichtung bereitgestellt. Durch die Berücksichtigung einer Messgröße bei der Berechnung der Messgröße kann ein Ist-Zustand der Anlage bei der Steuerung des jeweiligen Antriebs der Anlage berücksichtigt werden.

Bei einer weiteren vorteilhaften Ausgestaltung der Erfindung wird mit Hilfe eines ersten Vergleichsmoduls festgestellt, ob die mit der Berechnungsvorschrift berechnete Bewegungsgröße kleiner als ein Maximalwert ist und bei einem Überschreiten des Maximalwertes wird das Warnsignal bereitgestellt.

Bei dem Maximalwert kann es sich um eine maximal zulässige Geschwindigkeit einer Fördereinrichtung handeln. Vorteilhaft sind unterschiedliche Maximalwerte für unterschiedliche Betriebszustände der industriellen Anlage, insbesondere der Förderanlage, in dem ersten Vergleichsmodul hinterlegt.

Durch den Vergleich der Berechnungsgröße mit einem Maximalwert kann vorteilhaft die Betriebssicherheit der Anlage und/oder der jeweiligen Steuereinrichtung weiter erhöht werden.

Bei einer weiteren vorteilhaften Ausgestaltung der Erfindung erfolgt die Berechnung der weiteren Berechnungsgröße zumindest teilweise mit Hilfe von invertierten Rechenoperationen.

Unter einer invertierten Rechenoperation wird beispielhaft eine Addition einer negativen Größe anstelle einer Differenzbildung verstanden:

$$ a - b \rightarrow a + (-b) $$

Weiter wird unter einer invertierten Rechenoperation beispielhaft eine Multiplikation einer mit einer inversen Größe anstelle einer Division verstanden.

$$ \frac{a}{b} \rightarrow a \cdot (b)^{-1} $$

Durch die Verwendung von invertierten Rechenoperationen kann ein numerischer Fehler bei der Berechnungsvorschrift und/oder der Steuereinrichtung festgestellt werden.

Vorteilhaft werden zur Überprüfung der Berechnung der jeweiligen Bewegungsgröße die Berechnung der weiteren Bewegungsgröße abwechselnd mit Hilfe von gewöhnlichen Rechenoperationen und zumindest teilweise invertierten Rechenoperationen berechnet.

Durch eine abwechselnde Berechnung der weiteren Bewegungsgröße mit gewöhnlichen/invertierten Rechenoperationen können weitere Fehlfunktionen der jeweiligen Steuereinrichtung bzw. der Berechnungsvorschrift aufgedeckt werden.

Bei einer weiteren Ausgestaltung der Erfindung erfolgt die Berechnung der Bewegungsgröße und der weiteren Bewegungsgröße mit der gleiche Berechnungsvorschrift.

Vorteilhaft erfolgt die Berechnung der jeweiligen Bewegungsgröße und der jeweiligen weiteren Bewegungsgröße mit derselben Berechnungsvorschrift. Hierbei wird die Berechnungsvorschrift einmal bei Bereitstellung einer Messgröße aufgerufen und einmal bei Bereitstellung eines Tabellen-Istwertes. Die Bewegungsvorschrift ist demnach vorteilhaft als aufrufbare Funktion ausgebildet. Dieselbe Berechnungsvorschrift wird demnach mit unterschiedlichen Werten, Messgrößen oder Tabellen-Istwerten aufgerufen und ausgeführt.

Durch die Verwendung derselben Berechnungsvorschrift für die Bereitstellung der jeweils (weiteren) Bewegungsgröße können Unterschiede in den Berechnungsvorschriften ausgeschlossen werden.

Bei einer weiteren vorteilhaften Ausgestaltung der Erfindung erfolgt die Berechnung der Bewegungsgröße und der weiteren Berechnungsgröße sowie Überprüfung der Berechnungsgröße auf einer ersten Steuereinrichtung und/oder auf einer zweiten Steuereinrichtung oder einer weiteren Recheneinheit.

Die weitere Recheneinheit ist vorzugsweise als Mikrocomputer oder als Personal Computer ausgebildet. Die weitere Recheneinheit kann zumindest einer der Steuereinrichtungen zugeordnet sein.

Vorteilhaft erfolgt die vorstehend beschriebene Prozedur auf einer der Steuereinrichtung oder auf beiden Steuereinrichtungen. Insbesondere erfolgen die Prozeduren im Wesentlichen gleichzeitig. Alternativ oder zusätzlich erfolgt die zweite Prozedur zumindest teilweise auf der weiteren Recheneinheit.

Vorteilhaft sind die beiden eingesetzten Steuereinrichtungen redundant ausgeführt.

Durch die Überprüfung der Berechnung der Berechnungsgröße mit Hilfe einer hier beschriebenen, zweiten Prozedur kann vorteilhaft die Funktionsfähigkeit von zwei redundant ausgeführten Steuereinrichtungen überprüft werden.

Bei einer weiteren vorteilhaften Ausgestaltung der Erfindung überprüft die eine Sicherheitssteuerung eine Übereinstimmung der Berechnungsgröße und der weiteren Berechnungsgröße, wobei bei einer Abweichung der Berechnungsgröße und der weiteren Berechnungsgröße das Warnsignal bereitgestellt wird.

Alternativ oder zusätzlich zu der hier beschriebenen ersten und zweiten Prozedur kann die Betriebssicherheit der industriellen Anlage und/oder der jeweiligen Steuereinrichtung dadurch erhöht werden, falls zumindest stichprobenartig die Bewegungsgrößen mit den weiteren Berechnungsgrößen verglichen werden.

Durch einen solchen Vergleich kann unter anderem geprüft werden, ob die richtigen Messgrößen bzw. Tabellen-Istwerte übereinstimmen und zu den richtigen Bewegungsgrößen werden.

Weiter kann durch diese Ausgestaltung die Betriebssicherheit der Anlage erhöht werden.

Bei einer weiteren vorteilhaften Ausgestaltung der Erfindung werden das Signal und ein invertiertes Signal bereitgestellt, wobei das Signal und das invertierte Signal einer Sicherheitssteuerung bereitgestellt werden und wobei die Sicherheitssteuerung zur Analyse des Signals und/oder des invertierten Signals dient.

Vorteilhaft wird das invertierte Signal durch mit Hilfe eines Invertierglieds bereitgestellt. Das Signal und das Invertierte Signal werden vorteilhaft der Sicherheitssteuerung bereitgestellt, wobei die Sicherheitssteuerung vorteilhaft das Signal und das invertierte Signal gleichzeitig analysiert.

Durch die Bereitstellung des Signals und des invertierten Signals kann eine besonders schnelle und sichere Analyse des Signals erfolgen.

Bei der Vorrichtung zum sicheren Steuern eines Antriebs weist die Vorrichtung zumindest eine Steuereinrichtung auf, wobei die jeweilige Steuereinrichtung zur Berechnung einer Bewegungsgröße nach einer Berechnungsvorschrift ausgebildet ist, wobei die Berechnungsvorschrift gemäß einem Verfahren nach einem der vorangehenden Ansprüche überprüft wird.

Die Vorrichtung dient vorzugsweise zur Steuerung von Antrieben einer Anlage. Die Steuereinrichtung stellt dabei Bewegungsgrößen zur Steuerung oder Regelung der Antriebe bereit. Das vorstehend ausgeführte Verfahren wird vorteilhaft angewandt, um eine sichere Bereitstellung der Bewegungsgröße zu gewährleisten.

Bei einer weiteren vorteilhaften Ausgestaltung der Erfindung weist die Vorrichtung eine erste Steuereinrichtung und eine zweite Steuereinrichtung auf, wobei lediglich eine der beiden Steuereinrichtungen zur Ausführung der Überprüfung der Berechnung vorgesehen ist.

Insbesondere bei einer großen Anlage mit einer Vielzahl von Antrieben wird eine Mehrzahl von Steuereinrichtungen benötigt. Es ist jedoch vorteilhaft ausreichend, dass ein Teil der Steuereinrichtungen in Bezug zur Berechnung der jeweiligen Berechnungsgröße überprüft wird.

Vorteilhaft sind zumindest einige der Steuereinrichtungen redundant ausgeführt. Vorteilhaft wird bei lediglich einer der redundant ausgeführten Steuereinrichtungen die Bereitstellung der Bewegungsgröße mit Hilfe der vorstehend beschriebenen ersten Prozedur überprüft. Die Überprüfung erfolgt vorzugsweise mit der vorstehend ausgeführten zweiten Prozedur.

Bei einer weiteren vorteilhaften Ausgestaltung der Erfindung weist die Vorrichtung eine Sicherheitssteuerung auf, wobei die Sicherheitssteuerung zur Überwachung des Signals ausgebildet ist, und wobei die Sicherheitssteuerung bei einer Unregelmäßigkeit des Signals das Warnsignal bereitstellt.

Die Sicherheitssteuerung dient vorzugsweise zur Analyse des Signals. Bei der Analyse des Signals kann jeweils die Zeit bestimmt werden, die jeweils zwischen einem Wechsel der Signalstärken benötigt wird. Bei einer ordnungsgemäß funktionierenden Bereitstellung der Bewegungsgröße ist die Zeit zwischen den Wechseln der Signalstärken jeweils gleich.

Bei einer Abweichung der Zeit stellt die Sicherheitssteuerung das Warnsignal bereit. Durch das Warnsignal wird die Anlage oder der jeweilige Antrieb der Anlage in einen sicheren Zustand überführt.

Durch die Sicherheitssteuerung erfolgen vorteilhaft eine Überwachung des Signals und eine Überwachung der jeweiligen Steuereinrichtung. Mit Hilfe der Sicherheitssteuerung erfolgt dies besonders einfach.

Die Erfindung eignet sich insbesondere für einen Einsatz in einer industriellen Anlage, insbesondere einer Fördermaschine, vorzugsweise zum Einsatz in der Schwerindustrie oder im Bergbau. Die industrielle Anlage weist eine hier beschriebene Vorrichtung auf.

Das Computerprogrammprodukt dient zumindest zur teilweisen Ausführung auf einer Steuereinrichtung, wobei das Computerprogrammprodukt zur Ausführung eines hier beschriebenen Verfahrens vorgesehen ist.

Das Computerprogrammprodukt wird vorteilhaft auf der jeweiligen Steuereinrichtung installiert und ausgeführt. Bei der Ausführung des Computerprogrammproduktes wird dieses in einen Arbeitsspeicher geladen und von einer CPU ausgeführt. Die berechneten Bewegungsgrößen und/oder das Signal kann durch ein Interface bereitgestellt werden.

Im Folgenden wird die Erfindung näher anhand von Figuren beschrieben und erläutert. Die in den Figuren gezeigten Merkmale können einzeln zu neuen Ausführungen der Erfindung dienen.

Es zeigen:

FIG 1    die Prüfung einer Berechnungsvorschrift,
FIG 2    die Bereitstellung eines Warnsignals,

FIG 3     ein mögliches Verfahrensschema,
FIG 4     ein möglicher Aufbau der Vorrichtung,
FIG 5     ein weiteres mögliches Verfahrensschema sowie
FIG 6     einen weiteren möglichen Aufbau der Vorrichtung.

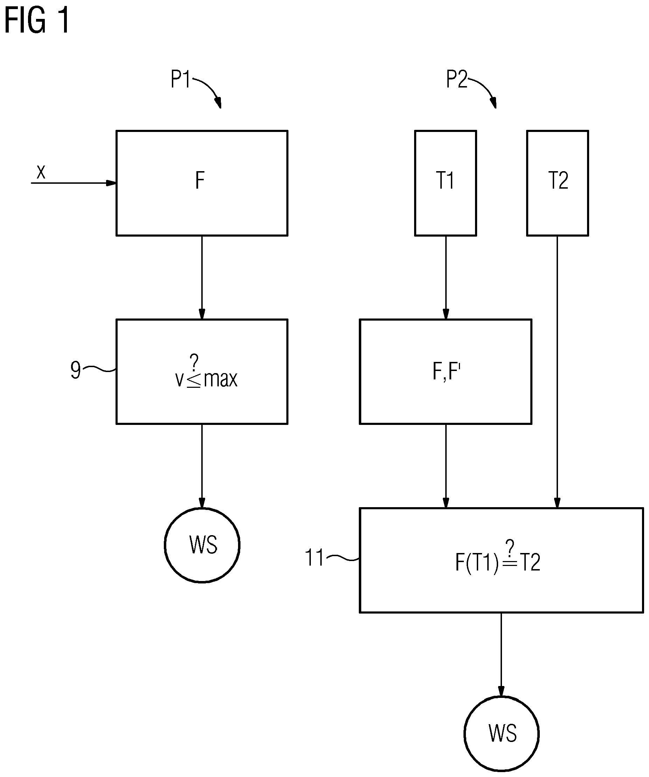

FIG 1 zeigt die Prüfung der Berechnungsvorschrift F. Mit Hilfe der ersten Prozedur wird eine Bewegungsgröße v bereitgestellt. Die Bewegungsgröße v wird mit einer Berechnungsvorschrift F bereitgestellt. Die Prüfung der Berechnungsvorschrift F erfolgt mittels einer zweiten Prozedur P2.

Die erste Prozedur P1 umfasst eine Berechnungsvorschrift F und ein erstes Vergleichsmodul 9. In die Berechnungsvorschrift F geht eine Messgröße x, beispielsweise die Position eines Anlagenteils, ein. Die Berechnungsvorschrift berechnet aus der Position x eine Bewegungsgröße v. Die Berechnungsvorschrift F stellt die berechnete Bewegungsgröße v dem ersten Vergleichsmodul 9 bereit. Das erste Vergleichsmodul 9 prüft, ob die berechnete Bewegungsgröße v kleiner als ein Maximalwert max ist. Im Falle eines Überschreitens des Maximalwertes max durch die Bewegungsgröße v stellt das erste Vergleichsmodul 9 ein Warnsignal WS bereit. Zur Prüfung, ob die Berechnungsvorschrift F richtig funktioniert, erfolgt die zweite Prozedur P2.

Die zweite Prozedur P2 umfasst eine erste Tabelle T1 und eine zweite Tabelle T2. Weiter umfasst die zweite Prozedur P2 die Berechnungsvorschrift F oder eine modifizierte Berechnungsvorschrift F'. Schließlich umfasst die zweite Prozedur P2 ein zweites Vergleichsmodul 11. Ausgehend von der ersten Tabelle T1 wird mit Hilfe der Berechnungsvorschrift F oder der modifizierten Berechnungsvorschrift F' eine weitere Bewegungsgröße v_1 berechnet. Die weitere Bewegungsgröße v_1 wird dem zweiten Vergleichsmodul 11 bereitgestellt. Weiter wird dem zweiten Vergleichsmodul 11 ein Tabellen-Sollwert v_2 bereitgestellt. Die Tabellen-Sollwerte v_2 sind in der zweiten Tabelle T2 hinterlegt.

Das zweite Vergleichsmodul 11 prüft, ob die weitere Bewegungsgröße v_1 und der Tabellen-Sollwert v_2 übereinstimmen. Falls die weitere Bewegungsgröße v_1 und der Tabellen-Sollwert v_2 nicht übereinstimmen, stellt das zweite Vergleichsmodul 11 das Warnsignal WS bereit. Die zweite Prozedur P2 überprüft demnach die Funktionsweise der Berechnungsvorschrift F der ersten Prozedur P1.

Bei der modifizierten Berechnungsvorschrift F' handelt es sich um die Berechnungsvorschrift, wobei lediglich anstelle der Rechenoperationen inverse Berechnungsoperationen eingesetzt werden. Die Berechnungsvorschrift F und die modifizierte Berechnungsvorschrift F' ist ansonsten vorteilhaft gleich aufgebaut. Demnach macht es bei einer ordnungsgemäß funktionierenden Steuereinrichtung 1, 1a, 1b keinen Unterschied, ob eine (weitere) Bewegungsgröße v, v_1 mit Hilfe der Berechnungsvorschrift F oder der modifizierten Berechnungsvorschrift F' berechnet wurde.

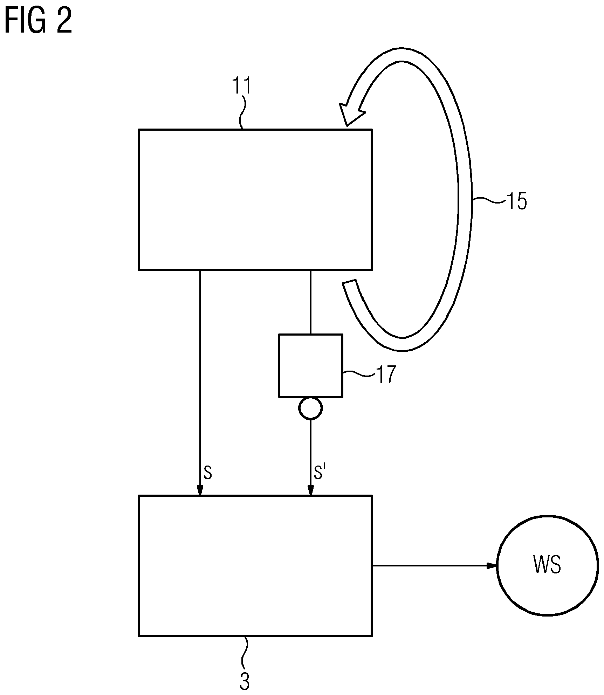

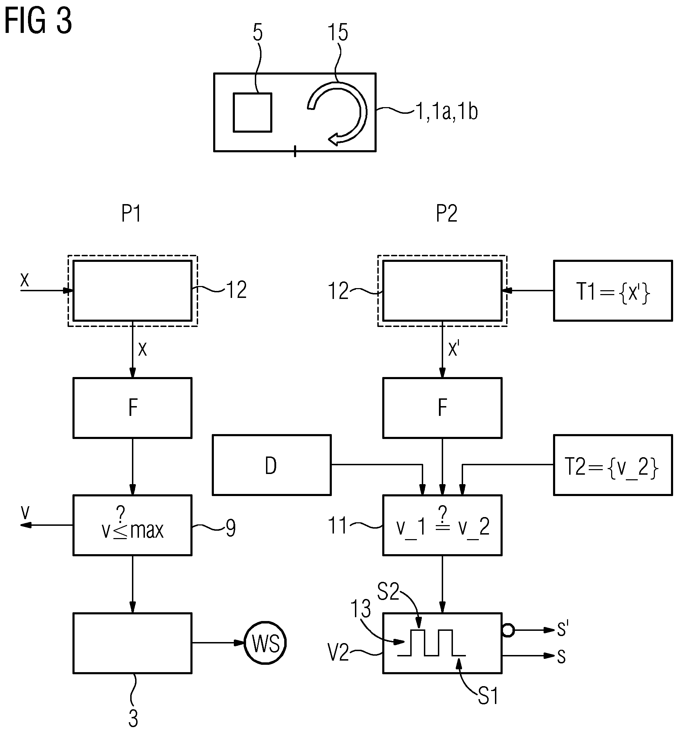

FIG 2 zeigt die Bereitstellung des Warnsignals WS. Das zweite Vergleichsmodul 11 vergleicht jeweils in einem Zyklus 15 die weitere Berechnungsgröße mit v_1 mit dem Tabellen-Sollwert v_2. Ein solcher Vergleich erfolgt jeweils zumindest einmal während des Zyklus 15. Während des Zyklus 15 wird ein Signal S sowie ein invertiertes Signal S' einer Sicherheitssteuerung 3 bereitgestellt. Das invertierte Signal S' wird mit Hilfe eines Invertierglieds 17 aus dem Signal S erzeugt. Die Sicherheitssteuerung 3 überprüft den Verlauf des Signals S und/oder des invertierten Signals S'. Das Signal S und das invertierte Signal S' liegen vorzugsweise in Form eines Toggle-Bit 13 vor, wobei das Toggle-Bit 13 auf seine Frequenz hin durch die Sicherheitssteuerung 3 untersucht wird. Eine mögliche Signal-Form des Toggle-Bits 13 ist in FIG 3 gezeigt. Bei Abweichung der Frequenz des Toggle-Bits 13 stellt die Sicherheitssteuerung 3 das Warnsignal WS bereit.

FIG 3 zeigt ein mögliches Verfahrensschema. Bei dem Verfahrensschema erfolgt während eines Zyklus 15 ein Zählen eines Zählers 5. Der Zähler 5 ist vorzugsweise in der Steuereinrichtung 1, 1a, 1b integriert. Das Verfahren umfasst wiederum zwei Prozeduren P1, P2. In der ersten Prozedur P1 erfolgt bei einem Signal des Zählers 5 ein Einlesen einer Messgröße x durch einen Input 12. Der Input 12 ist jeweils gestrichelt umrandet, weil die jeweilige Messgröße x' (und/oder der Tabellen-Istwert x') auch direkt an die Berechnungsvorschrift F übergeben werden kann. Die Messgröße x wird der Berechnungsvorschrift F bereitgestellt. Die Berechnungsvorschrift F berechnet aus der Messgröße x die Bewegungsgröße v. Die Bewegungsgröße v wird dem ersten Vergleichsmodul 9 bereitgestellt. Das erste Vergleichsmodul 9 prüft, ob die Bewegungsgröße v kleiner als ein Maximalwert max ist. Der Maximalwert max ist in der Regel von einem Benutzer vorgegeben. Falls die Bewegungsgröße v größer als der Maximalwert max ist, wird ein Warnsignal WS ausgegeben. Das Warnsignal WS wird vorteilhaft von einer Sicherheitssteuerung 3 bereitgestellt, wobei die Sicherheitssteuerung 3 mit dem ersten Vergleichsmodul 9 in einer Wirkverbindung steht. Falls die Bewegungsgröße v nicht größer als der Maximalwert max ist, wird die Bewegungsgröße v einer weiteren Antriebskomponente (nicht gezeigt) bereitgestellt. Die erste Prozedur P1 wird in ihrer Funktion mit Hilfe der zweiten Prozedur P2 überprüft.

Die zweite Prozedur P2 umfasst eine erste Tabelle T1 und eine zweite Tabelle T2. Die erste Tabelle T1 weist Tabellen-Istwerte x' auf. Der jeweilige Tabellen-Istwert x' entspricht in seiner Funktion der jeweiligen Messgröße x. Der jeweilige Tabellen-Istwert x' wird vorteilhaft von einem Input 12 der Berechnungsvorschrift F oder einer modifizierten Berechnungsvorschrift F' bereitgestellt. Aus den jeweilig vorgegebenen Messgrößen x' berechnet die Berechnungsvorschrift F oder die modifizierte Berechnungsvorschrift F' jeweils weitere Bewegungsgrößen v_1. Weiter sind Tabellen-Sollwerte v_2 in einer zweiten Tabelle T2 hinterlegt.

Ein zweites Vergleichsmodul 11 überprüft, ob die jeweilige weitere Bewegungsgröße v_1 und der jeweilige Tabellen-Sollwert v_2 übereinstimmen.

Der Vergleich erfolgt dadurch, dass zu der jeweiligen weiteren Berechnungsgröße v_1 oder zu dem jeweiligen Tabellen-Sollwert v_2 ein Offset D addiert wird. Der Offset D ist entweder ein kleiner positiver oder ein kleiner negativer Wert, z.B. D={0,1;-0,1}. In diesem Beispiel wird der jeweilige Offset D zu dem jeweiligen Tabellen-Sollwert v_2 addiert. Die sich daraus ergebende Summe [z.B. v_2+($\pm$0,1)] wird mit der jeweiligen weiteren Bewegungsgröße v_1 verglichen.

Der Vergleich erfolgt mit Hilfe des zweiten Vergleichsmoduls 11. Das zweite Vergleichsmodul 11 stellt ein Signal S mit einer ersten Signalstärke S1 bereit, falls die Summe (jeweils aus Tabellen-Sollwert und Offset) kleiner als die weitere Bewegungsgröße v_1 ist.

Das weitere Vergleichsmodul 11 stellt ein Signal S mit einer zweiten Signalstärke S2 bereit, falls die Summe größer als die weitere Bewegungsgröße v_1 ist.

Da bei jedem Zyklus 15 abwechselnd einmal ein positiver Offset D und einmal ein negativer Offset D zu dem jeweiligen Tabellen-Sollwert v_2 addiert wird, wechselt die Signalstärke S1, S2 des Signals S bei jedem Zyklus 15. Das Signal S ist also ein Toggle-Bit 13.

Das Signal S als auch ein invertiertes Signal S' wird durch das zweite Vergleichsmodul 11 bereitgestellt.

Das Signal S und/oder das invertierte Signal S' wird vorzugsweise einer Sicherheitssteuerung 3 bereitgestellt. Bei einer Abweichung des Signals S oder des invertierten Signals S' erfolgt eine Ausgabe des Warnsignals WS von der Sicherheitssteuerung.

Die jeweilige Prozedur P1, P2 kann zumindest einmal während eines Zyklus 15 ablaufen. Bei dem jeweiligen Zyklus 15 wird der Zähler 5 ein Zählglied heraufgesetzt. Das jeweilige Zählglied legt vorteilhaft fest, welcher Tabellen-Istwert/ Tabellen-Sollwert x', v_2 von der jeweiligen Tabelle T1, T2 bereitgestellt wird.

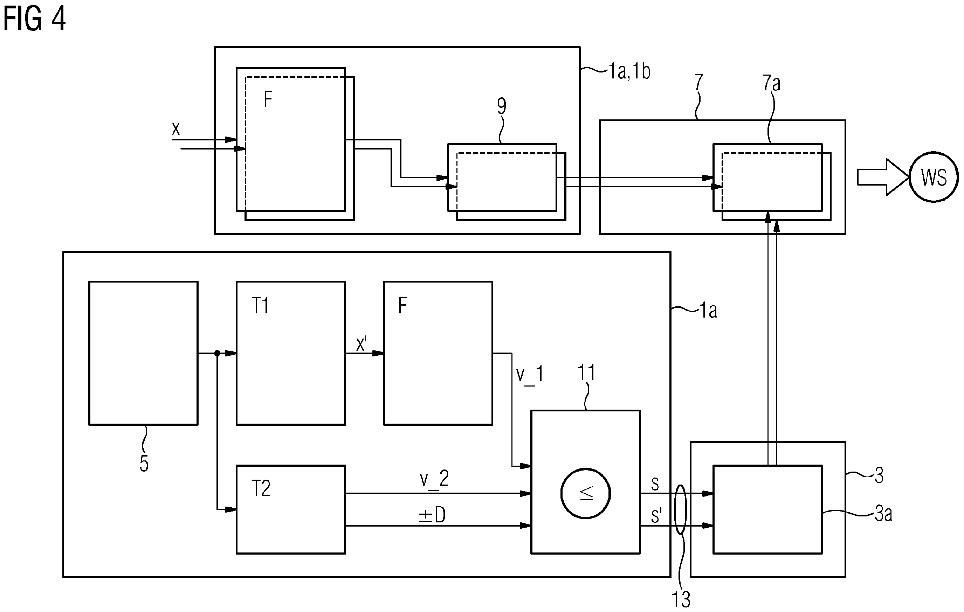

FIG 4 zeigt eine mögliche Vorrichtung. Die Vorrichtung umfasst eine erste Steuereinrichtung 1a und eine zweite Steuereinrichtung 1b. Die Vorrichtung umfasst weiter ein Sicherheitsmodul 7 und eine Sicherheitssteuerung 3. Die erste und die zweite Steuereinrichtung 1a, 1b umfassen jeweils eine Berechnungsvorschrift F, wobei die Berechnungsvorschrift F jeweils eine Bewegungsgröße v aus einer Messgröße v berechnet. Die Bewegungsgröße v wird von der Berechnungsvorschrift F jeweils an ein erstes Vergleichsmodul 9 übertragen. Das erste Vergleichsmodul 9 überprüft jeweils, ob die jeweilige Bewegungsgröße v einen jeweiligen Maximalwert max nicht überschreitet. Falls die Bewegungsgröße v den Maximalwert max überschreitet, wird ein Signal an das Sicherheitsmodul 7, insbesondere an ein Ausgabemodul 7a des Sicherheitsmoduls übertragen. Bei einem solchen Überschreiten gibt das Sicherheitsmodul 7 ein Warnsignal WS aus. In der ersten Steuereinrichtung 1a erfolgt weiter die Prüfung der Berechnungsvorschrift F.

Die Prüfung erfolgt wie auch in FIG 3 dargestellt.

Ein Zähler 5 zählt bei jedem Zyklus 15 jeweils ein Zählglied hoch. Der Zähler 5 stellt das Zählglied jeweils einer ersten Tabelle T1 und einer zweiten Tabelle T2 bereit. Die erste Tabelle T1 stellt gemäß dem Zählglied einen Tabellen-Istwert v' an die Berechnungsvorschrift F bereit. Die Berechnungsvorschrift F berechnet aus der jeweilig bereits vorliegenden Messgröße x' die weitere Bewegungsgröße v_1. Anhand des jeweiligen Zählglieds stellt die zweite Tabelle T2 einen Tabellen-Sollwert v_2 bereit. Der Tabellen-Sollwert v_2 und die weitere Bewegungsgröße v_1 werden einem zweiten Vergleichsmodul 11 bereitgestellt.

Die zweite Tabelle T2 stellt vorteilhaft auch ein Offset D an das zweite Vergleichsmodul 11 bereit. Das zweite Vergleichsmodul 11 überprüft, ob die weitere Bewegungsgröße v_1 und der Tabellen-Sollwert v_2 übereinstimmen. Hierzu dient das bereits vorstehend beschriebene Verfahren, wobei das zweite Vergleichsmodul 11 das Signal S sowie ein invertiertes Signal S' bereitstellt. Das Signal S und das Signal S' liegen als Toggle-Bit 13 vor. Das Signal S und das invertierte Signal S' werden der Sicherheitssteuerung 3 bereitgestellt. Die Sicherheitssteuerung 3 untersucht das Signal S und das invertierte Signal S' auf die Frequenz des Toggle-Bit 13. Bei einer Abweichung der Frequenz des Toggle-Bit 13 wird ein weiteres Signal an das Sicherheitsmodul 7a der Sicherheitssteuerung 7 bereitgestellt und das Sicherheitsmodul 7a gibt ein Warnsignal WS aus. Anhand des Warnsignals WS kann die Anlage in einen sicheren Zustand überführt werden.

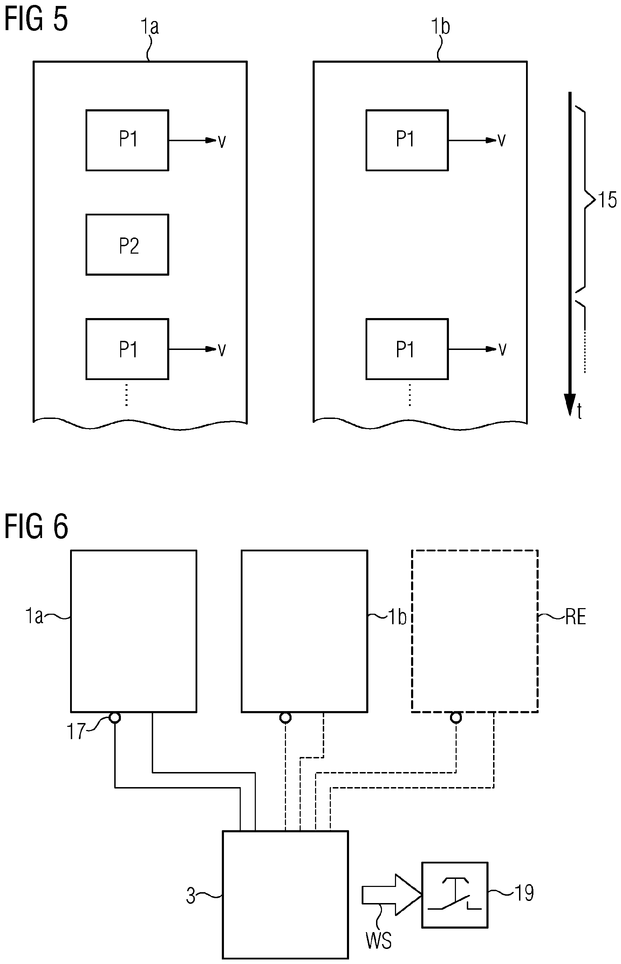

FIG 5 zeigt ein weiteres mögliches Verfahrensschema. Gezeigt ist die erste Steuereinrichtung 1a und die zweite Steuereinrichtung 1b, wobei die in FIG 1 oder FIG 3 dargestellten Prozeduren P1, P2 in ihrem zeitlichen Ablauf dargestellt sind. Während eines Zyklus 15 erfolgt in der ersten Steuereinrichtung zunächst die Bereitstellung der Bewegungsgröße v mit Hilfe der ersten Prozedur P1. Im Anschluss an die erste Prozedur P1 erfolgt die Überprüfung der Berechnungsvorschrift F mit Hilfe der zweiten Prozedur P2. Danach erfolgt in einem weiteren Zyklus 15 wiederum die Bereitstellung der Bewegungsgröße v mit Hilfe der ersten Prozedur P1. Demgegenüber erfolgt in der zweiten Steuereinrichtung 1b während eines Zyklus 15 jeweils nur die Bereitstellung der Bewegungsgröße v durch die Prozedur P1. Die zweite Prozedur P2 wird in der zweiten Steuereinrichtung 1b vorteilhaft nicht durchgeführt, d.h., dass nach Ablauf der ersten Prozedur P1 die zweite Steuereinrichtung 1b keine weiteren Prozeduren durchführt. Erst mit Beginn des weiteren Zyklus 15 erfolgt wieder in beiden Steuereinrichtungen 1a, 1b die Bereitstellung der Bewegungsgröße v durch die jeweils erste Prozedur P1. Der zeitliche Verlauf ist durch den nach unten zeigenden Pfeil neben den Steuereinrichtungen 1a, 1b angezeigt. Der Pfeil zeigt in Richtung der Zeit t.

FIG 6 zeigt einen weiteren möglichen Aufbau der Vorrichtung. Es wird eine erste Steuereinrichtung 1a

und eine zweite Steuereinrichtung 1b gezeigt. Die erste Steuereinrichtung 1a ist mit der Sicherheitssteuerung 3 wirkverbunden. Die erste Steuereinrichtung 1a stellt das Signal S an die Sicherheitssteuerung 3 bereit. Die erste Steuereinrichtung 1b stellt überdies das invertierte Signal S' der Sicherheitssteuerung 3 bereit. Das invertierte Signal S' wird durch das Invertierglied 17 invertiert. Das Invertierglied 17 ist hierbei lediglich durch einen Kreis an der Unterseite der ersten Steuereinrichtung 1a dargestellt.

Optional ist auch die zweite Steuereinrichtung 1b mit der Sicherheitssteuerung 3 wirkverbunden. Alternativ oder zusätzlich stellt auch die zweite Steuereinrichtung 1b das Signal S und das invertierte Signal S' der Sicherheitssteuerung 3 bereit.

Alternativ oder zusätzlich kann das Signal S auch von einer Recheneinheit RE an die Sicherheitssteuerung 3 bereitgestellt werden. Durch die alternative oder zusätzliche Recheneinheit kann die Berechnungsvorschrift selbst überprüft werden.

Vorteilhaft erfolgt nur die zweite Prozedur P2 mit Hilfe der Recheneinheit RE. Die Recheneinheit RE ist vorzugsweise durch einen Mikrokontroller ausgeführt, wobei der Mikrokontroller den gleichen Aufbau wie die erste und/oder zweite Steuereinrichtung 1a, 1b haben kann.

Die Sicherheitssteuerung 3 gibt bei Vorliegen eines Fehlers bei der Berechnung der jeweiligen Bewegungsgröße v ein Warnsignal WS aus. Das Warnsignal wird einem Schaltmodul 19 bereitgestellt. Das Schaltmodul 19 überführt bei Vorliegen eines Warnsignals WS die industrielle Anlage in einen sicheren Zustand. Vorzugsweise schaltet das Schaltmodul 19 zumindest denjenigen Antrieb aus, für den die Bewegungsgröße v bereitgestellt worden ist.

Zusammenfassend betrifft die Erfindung ein Verfahren zum sicheren Betrieb einer Steuereinrichtung 1, 1a, 1b, eine Vorrichtung zum sicheren Steuern eines Antriebs sowie ein Computerprogrammprodukt und eine industrielle Anlage. Zumindest eine Steuereinrichtung 1, 1a, 1b berechnet eine Bewegungsgröße v aus einer Messgröße x mit Hilfe einer Berechnungsvorschrift F. Um einen systematischen Fehler in der Berechnungsvorschrift F oder in der Steuereinrichtung 1, 1a, 1b aufzudecken, erfolgt mit zumindest einer Steuereinrichtung 1, 1a, 1b die Berechnung einer weiteren Bewegungsgröße v_1 mit der Berechnungsvorschrift F. Die Berechnungsvorschrift F erhält hierzu Tabellen-Istwerte x' aus einer ersten Tabelle T. Die jeweilige weitere Bewegungsgröße v2 wird jeweils mit einem Tabellen-Sollwert v_2 verglichen. Falls die weitere Berechnungsgröße v_1 von dem Tabellen-Sollwert v_2 abweicht, wird ein Warnsignal WS bereitgestellt.

Bei dem Vergleich der weiteren Bewegungsgröße v_1 und dem Tabellen-Sollwert v_2 wird beispielhaft zu dem Tabellen-Sollwert v_2 ein Offset D addiert. Der Offset D ist abwechselnd positiv oder negativ. Bei dem Vergleich wird je nach Vorzeichen der Differenz der verglichenen Größen v_1, v_2 ein Signal S mit einer ersten Signalstärke S1 oder mit einer zweiten Signalstärke S2 bereitgestellt. Durch eine Analyse des Signals S, insbesondere der Frequenz des Signals S, kann bei einer Abweichung ein systematischer Fehler in der Steuereinrichtung 1a, 1b oder der Berechnungsvorschrift F geschlossen werden.

**Patentansprüche**

1. Verfahren zum sicheren Betrieb einer Steuereinrichtung, aufweisend zumindest eine Steuereinrichtung (1a, 1b), wobei die Steuereinrichtung zur Berechnung einer Bewegungsgröße (v) ausgebildet ist, wobei zur Berechnung der Bewegungsgröße (v) eine Berechnungsvorschrift (F) dient, wobei die Richtigkeit der Berechnung der Bewegungsgröße (v) mit zumindest folgenden Schritten geprüft wird:

   - Berechnung einer weiteren Bewegungsgröße (v_1) mit einem Tabellen-Istwert (X') aus einer ersten Tabelle (T1)
   - Bereitstellen eines Tabellen-Sollwertes (v_2) aus einer zweiten Tabelle (T2),
   - Vergleich der weiteren Bewegungsgröße (v_1) mit dem Tabellen-Sollwert (v_2)
   - Ausgabe eines Warnsignals (WS) falls die jeweilige weitere Bewegungsgröße (v_1) von dem jeweiligen Tabellen-Sollwert (v_2) abweicht.

2. Verfahren nach Anspruch 1, wobei der jeweilige Tabellen-Sollwert (v_2) jeweils mit einem Offset (D) zu einer Summe (v_2+D) addiert wird, wobei beim Vergleich der Summe (v_2+D) mit der weiteren Bewegungsgröße (v_1) ein Signal (S) mit einer ersten Signalstärke (S1) bereitgestellt wird, insofern die Summe (v_2+D) größer als die weitere Bewegungsgröße (v_1) ist, wobei beim Vergleich der Summe (v_2+D) mit der weiteren Bewegungsgröße (v_1) das Signal (S) mit einer zweiten Signalstärke (S2) bereitgestellt wird, insofern die Summe (v_2+D) kleiner als die weitere Bewegungsgröße (v_1) ist.

3. Verfahren nach einem der vorangehenden Ansprüche, wobei das Signal (S) auf einen regelmäßigen Wechsel von der ersten Signalstärke (S1) auf die zweite Signalstärke (S2) hin untersucht wird.

4. Verfahren nach Anspruch 3, wobei bei einer Unregelmäßigkeit des Wechsels der Signalstärken (S1, S2) das Warnsignal (WS) ausgegeben wird.

5. Verfahren nach einem der vorangehenden Ansprüche, wobei die Berechnung der Bewegungsgröße (v) zumindest einmal in einem Zyklus (15) erfolgt, wobei die Richtigkeit der Berechnung der Bewegungsgröße (v) jeweils während des Zyklus (15) geprüft wird.

6. Verfahren nach einem der vorangehenden Ansprüche, wobei die Berechnung der Bewegungsgröße (v) anhand einer Messgröße (x) erfolgt.

7. Verfahren nach einem der vorangehenden Ansprüche, wobei mit Hilfe eines ersten Vergleichsmoduls (9) festgestellt wird, ob die berechnete Bewegungsgröße (v) kleiner als ein Maximalwert (max) ist und bei einem Überschreiten des Maximalwertes (max) das Warnsignal (WS) bereitgestellt wird.

8. Verfahren nach einem der vorangehenden Ansprüche, wobei die Berechnung der weiteren Berechnungsgröße (v_1) zumindest teilweise mit Hilfe von invertierten Rechenoperationen erfolgt.

9. Verfahren nach einem der vorangehenden Ansprüche, wobei die Berechnung der Bewegungsgröße (v) und der weiteren Bewegungsgröße (v_1) mit der gleichen Berechnungsvorschrift (F) erfolgt.

10. Verfahren nach einem der vorangehenden Ansprüche, wobei die Berechnung der Bewegungsgröße (v) und der weiteren Berechnungsgröße (v_1) sowie Überprüfung der Berechnungsgröße auf der ersten Steuereinrichtung (1a) und auf der zweiten Steuereinrichtung (1b) oder einer Recheneinheit (RE) erfolgt.

11. Verfahren nach zumindest dem Anspruch 10, wobei eine Sicherheitssteuerung (3) eine Übereinstimmung der Berechnungsgröße (v) und der weiteren Berechnungsgröße (v_1) überprüft und bei einer Abweichung der Berechnungsgröße (v) und der weiteren Berechnungsgröße (v_1) das Warnsignal (WS) bereitstellt.

12. Verfahren nach einem der Ansprüche 2 bis 11, wobei das Signal (S) und ein invertiertes Signal (S') bereitgestellt werden, wobei das Signal (S) und das invertierte Signal (S') einer Sicherheitssteuerung (3) bereitgestellt werden und wobei die Sicherheitssteuerung (3) zur Analyse des Signals (S) und/oder des invertierten Signals (S') dient.

13. Vorrichtung zum sicheren Steuern eines Antriebs, aufweisend zumindest eine Steuereinrichtung (1a, 1b), wobei die jeweilige Steuereinrichtung (1a, 1b) zur Berechnung einer Bewegungsgröße (v) nach einer Berechnungsvorschrift (F) ausgebildet ist, wobei die Berechnungsvorschrift (F) gemäß einem Verfahren nach einem der vorangehenden Ansprüche überprüft wird.

14. Vorrichtung nach Anspruch 13, aufweisend eine erste Steuereinrichtung (1a) und eine zweite Steuereinrichtung (1b), wobei lediglich eine der beiden Steuereinrichtungen zur Ausführung der Überprüfung der Berechnung vorgesehen ist.

15. Vorrichtung nach einem der Ansprüche 13 oder 14, weiter aufweisend eine Sicherheitssteuerung (3), wobei die Sicherheitssteuerung (3) zur Überwachung des Signals (S, S') ausgebildet ist, und wobei die Sicherheitssteuerung (3) bei einer Unregelmäßigkeit des Signals (S, S') das Warnsignal bereitstellt.

16. Industrielle Anlage, insbesondere eine Fördermaschine, vorzugsweise zum Einsatz in der Schwerindustrie oder im Bergbau, aufweisend eine Vorrichtung nach einem der Ansprüche 13 bis 15.

17. Computerprogrammprodukt zur zumindest teilweisen Ausführung auf einer Steuereinrichtung (1a, 1b), wobei das Computerprogrammprodukt zur Ausführung eines Verfahrens nach einem der Ansprüche 1 bis 13 vorgesehen ist.

FIG 1

P1

X → [ F ]

9 — [ $v \overset{?}{\leq} max$ ]

( WS )

P2

[ T1 ]    [ T2 ]

[ F,F' ]

11 — [ $F(T1) \overset{?}{=} T2$ ]

( WS )

FIG 2

FIG 3

FIG 4

EP 3 528 073 A1

## FIG 5

## FIG 6

Europäisches
Patentamt

European
Patent Office

Office européen
des brevets

## EUROPÄISCHER RECHERCHENBERICHT

**Nummer der Anmeldung**

EP 18 15 6928

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 103 47 475 A1 (BASF AG [DE]) 21. April 2005 (2005-04-21) * das ganze Dokument * ----- | 1-17 | INV. G05B23/02 G05B9/02 |
| X | DE 10 2009 007221 A1 (SIEMENS AG [DE]) 10. Juni 2010 (2010-06-10) * Absatz [0005] - Absatz [0012]; Abbildung 1 * ----- | 1-14 | |
| X | DE 10 2007 024794 A1 (ZAHNRADFABRIK FRIEDRICHSHAFEN [DE]) 27. November 2008 (2008-11-27) * Absatz [0019] - Absatz [0024]; Abbildung 1 * ----- | 1-14 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| München | 20. August 2018 | Rakoczy, Tobias |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    .........................................................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 15 6928

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-08-2018

| Im Recherchenbericht angeführtes Patentdokument | Datum der Veröffentlichung | Mitglied(er) der Patentfamilie | Datum der Veröffentlichung |
|---|---|---|---|
| DE 10347475 A1 | 21-04-2005 | KEINE | |
| DE 102009007221 A1 | 10-06-2010 | KEINE | |
| DE 102007024794 A1 | 27-11-2008 | DE 102007024794 A1<br>EP 2148996 A1<br>US 2010152985 A1<br>WO 2008145466 A1 | 27-11-2008<br>03-02-2010<br>17-06-2010<br>04-12-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140288881 A1